# EUROPÄISCHE PATENTANMELDUNG

(11) **EP 2 107 550 A2**
(43) Veröffentlichungstag der Anmeldung: **07.10.2009**
(21) Anmeldenummer: 09004796.0
(22) Anmeldetag: 01.04.2009
(51) Int. Cl.: G09G 5/00, G06F 1/32

(54) **Vorrichtung zur Überwachung einer Monitorsteuerung**

(30) Priorität: 01.04.2008 DE 102008016938
(71) Anmelder: ELMOS Semiconductor AG, 44227 Dortmund (DE)
(72) Erfinder: Reime, Gerd, Bühl, 77815 (DE); Larm, Jürgen, Farmington Hill, CT 48339 (US)
(74) Vertreter: Reinhardt, Harry

(57) **Zusammenfassung**

Eine Vorrichtung weist zur Überwachung einer Monitorsteuerung mit einer Anzeigeeinheit (M) wenigstens ein der Anzeigeeinheit zugeordnetes oder zuordenbaren optisches Element, ein Energie-Management-System (S) mit einer Erfassungseinheit mit wenigstens einem aussendenden Element (11) und wenigstens einem empfangenden Element (12) zur Erfassung von Bewegungen im Umfeld der Anzeigeeinheit (M) zur Umsetzung der erfassten Bewegungen in ein Signal (10) sowie mit eine Verarbeitungseinheit (P) zur Verarbeitung des Signals (10) in ein Steuersignal (13) für eine Funktion der Anzeigeeinheit (M) auf. Dadurch, dass die Erfassungseinheit durch einen optoelektronischen Sensor (H) gebildet ist und dass das aussendende Element (11) des Sensors (H) das wenigstens eine für andere Zwecke an der Vorrichtung vorhandene, der Anzeigeeinheit (M) zugeordnete optische Element ist und dass das empfangende Element (12) des Sensors (H) ebenfalls ein vorhandenes, der Vorrichtung zugeordnetes oder zuordenbares optisches Element ist, wird eine preisgünstige Realisierung eines Energie-Management-Systems unter Verwendung vorhandener optischer Elemente geschaffen.

## Beschreibung

### Gebiet der Erfindung

Die Erfindung betrifft eine Vorrichtung zur Überwachung einer Monitorsteuerung mit einem Energie-Management-System und/oder einem Sicherungssystem nach dem Oberbegriff des Anspruches 1.

### Stand der Technik

Derartige Vorrichtungen sind z.B. im Bereich von Personal Computern bekannt und dienen dazu, das Gerät in einen Energiesparmodus oder einen Standby-Betrieb herunter zu schalten, wenn das Gerät über einen bestimmten Zeitraum nicht benutzt wird. Dies erfolgt z.B. dadurch, dass das Gerät registriert, ob die Maus bewegt wurde oder nicht. Ist eine Bewegung über einen bestimmten Zeitraum nicht erfolgt, wird in den Standby-Modus geschalten. Eine Überwachung ausgehend vom Bildschirm oder eine Sicherungsüberwachung erfolgt dadurch nicht.

Aus der US 2008/0077422 A ist ein Energiemanagementsystem in Verbindung mit einem Bewegungssensor für Werbezwecke bekannt. Das System überträgt Werbeinformationen zum Beispiel in einem Schaufenster oder in einem anderem Werbebereich, solange es feststellt, dass vor dem System Bewegungen erfolgen, also Personen anwesend sind. Erfolgt keine Bewegung mehr, schaltet das System in einen Energiesparmodus und wird bei Erkennen einer erneuten Bewegung erneut eingeschaltet. Zu diesem Zweck sind aussendende und empfangende Elemente für eine Sensorerfassung vorhanden.

Zur Messung dynamischer Änderungen wurde bereits in der EP 0 706 648 B1 das HALIOS^{®}-Verfahren zur empfindlichen Erfassung von reflektierten Lichtsignalen zur Detektion unter anderem auch von Gesten und Bewegungen beschrieben. Das Verfahren kann z. B. optoelektronisch betrieben werden, wobei Sender über einen Taktgenerator zeitabschnittsweise und wechselweise betrieben werden. Das in der Amplitude wenigstens einer Strecke geregelte Signal wirkt so auf den Empfänger ein, dass ein Empfangssignal ohne taktsynchrone Signalanteile entsteht. Das Empfangssignal des Empfängers wird einem Synchrondemodulator zugeführt, der das Empfangssignal wiederum in den wenigstens zwei Sendern zugeordnete, entsprechende Signalkomponenten zerlegt. Diese werden in einem Vergleicher miteinander verglichen, wobei im Ruhezustand ohne Fremdeinflüsse ein einem Nullzustand entsprechendes Signal am Ausgang des Vergleichers entsteht. Liegt am Ausgang des Vergleichers kein diesem Nullzustand entsprechendes Signal an, wird die Leistung, die dem Sender zugeführt wird, dahingehend geregelt, bis dieser Zustand erreicht ist. Für die Erfassung von Bewegungen eines Objekts im Umfeld des HALIOS^{®}-Sensors wird der am Ausgang des Vergleichers anstehende Regelwert ausgewertet, der zugleich ein Maß für die Abweichung vom Nullzustand ist. Dieses Signal kann als weiteres Steuersignal für die Steuerung von Funktionen genutzt werden. Die Möglichkeiten des Halios-Sensors werden insbesondere in der Veröffentlichung Dr. Frank Rottmann und Dr. Egbert Spiegel: "Electronic Concept fulfils optical sensor dream", Elmos Semiconductor AG, 12/02, 8 Seiten näher erläutert.

Aus der WO 2005/028 266 A1 ist ein Verfahren zum Betreiben einer Sensorvorrichtung zur Detektion von Störeinflüssen auf der Außenseite eines optisch durchlässigen Körpers bekannt. Das System wird insbesondere als Scheibenwischersensor zur Detektion von Niederschlägen verwendet. Erfasst wird dort zusätzlich die Bewegung eines nichttransparenten körperlichen Gegenstand im Detektionsbereich, um dadurch eine Schaltfunktion auszulösen. Es handelt sich damit dort um ein bestehendes Sensorsystem, dessen Sensorsignal benutzt wird, um weitere Informationen über einen nichttransparenten Gegenstand zu erhalten. Die Zusatzfunktion wird damit aus dem Sensorsignal gewonnen.

### Aufgabe der Erfindung

Ausgehend von diesem Stand der Technik liegt der vorliegenden Erfindung die Aufgabe zugrunde, eine preisgünstige Realisierung eines Energie-Management-Systems und/oder Sicherungssystem weitestgehend unter Verwendung vorhandener optischer Elemente zu schaffen.

Diese Aufgabe wird durch eine Vorrichtung mit den Merkmalen des Anspruches 1 gelöst.

Die Vorrichtung nutzt in Verbindung mit den bestehenden Elementen einer Monitorsteuerung die Vorteile des optoelektronischen HALIOS^{®}-Sensors, der weitestgehend aufgrund des Systems einer optischen Waage eine hohe Empfindlichkeit selbst bei geringen Signalwerten erreichen kann. Daher kann die Vorrichtung auch auf der Anzeigeeinheit zugeordnete oder zuordenbare optische Elemente als aussendendes Element und auch als empfangendes Element zurückgreifen, ohne dass aufwändige Sender und Empfänger erforderlich sind. Gleichwohl kann die Vorrichtung auch als ein Zusatzgerät mit den Elementen der Anzeigeeinrichtung betrieben werden. Vorzugsweise weist die Steuerungsschaltung selbst einen möglichst geringen Eigenverbrauch auf, damit auch im batteriebetriebenen Zustand eines Geräts eine effektive Energieeinsparung möglich ist.

Das empfangende Element ist vorzugsweise eine Fotodiode, kann aber auch eine LED sein und kann ebenso durch eine in der Vorrichtung integrierte oder daran angebrachte WEB-CAM oder Kamera gebildet sein. Vorzugsweise ist das aussendende Element und gegebenenfalls auch das empfangende Element durch wenigstens einen Teil der Hintergrundbeleuchtung des Displays der Anzeigeeinheit gebildet, sodass tatsächlich insgesamt auf Elemente zurückgegriffen werden kann, die an der Anzeigeeinheit ohnehin vorhanden sind. In diesem Fall lässt sich die gesamte Überwachungseinrichtung als reines Softwaremodul im Speicher des zu betreibenden Geräts integrieren, was die Kosten deutlich verringert. Damit wird ein Einsatz des Geräts auch im Mobile Phone Bereich möglich.

Weitere Vorteile ergeben sich aus den Unteransprüchen und der nachfolgenden Beschreibung.

Kurzbeschreibung der Figur

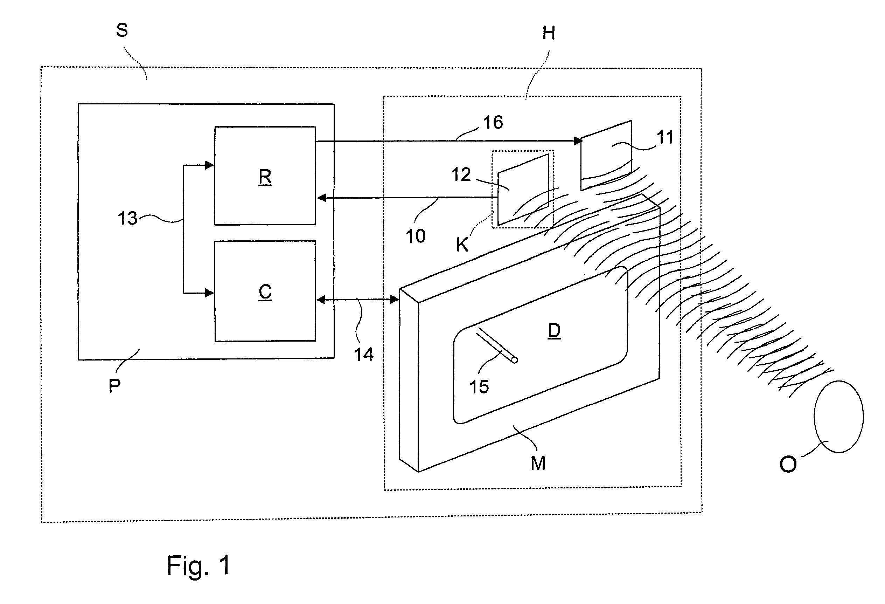

Im Folgenden wird die Erfindung anhand eines Ausführungsbeispieles näher erläutert. Die einzige Fig. 1 zeigt einen schematischen Aufbau der Vorrichtung.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figur 1 zeigt eine Vorrichtung zur Überwachung einer Monitorsteuerung mit einem Energie-Management-System und/oder Sicherungssystem S wie z.B. einem Power- oder Batterie-Management-System. Die Vorrichtung weist eine Erfassungseinrichtung auf, die zur Erfassung von Bewegungen im Umfeld der Anzeigeeinheit M vorgesehen ist. Derartige Vorrichtungen wurden bisher z.B. durch die Erfassung der Bewegung einer Maus gebildet, werden nun jedoch bei der vorliegenden Vorrichtung durch die Elemente der Anzeigeeinheit M in Verbindung mit den Elementen des HALIOS^{®}-Sensors gebildet, die im Ausführungsbeispiel durch die gesondert gezeichneten Teile eines aussendenden Elements 11 und eines empfangenden Elements 12 gebildet sind. Alternative Sensorsysteme können verwendet werden, sofern die Doppelfunktion der optischen Elemente als aussendendes Element bzw. empfangendes Element in Verbindung mit dem sonstigen Verwendungszweck des optischen Elements sichergestellt ist. Diese Elemente können selbstverständlich auch in den Bildschirm, also in das Display D der Anzeigeeinrichtung M integriert sein oder auch wie in Fig. 1 gestrichelt dargestellt als gesonderte WEB-CAM oder Kamera K zumindest das aussendende Element 12 enthalten. Ergänzend können auch mehrere aussendende Elemente 11 und empfangende Elemente 12 vorgesehen sein, wenn es die entsprechende Anwendung gebietet.

Die Steuerung des Sensors, im Ausführungsbeispiel des HALIOS^{®}-Sensors H, die insofern Teil einer Verarbeitungseinheit P ist, sendet mittels einer zeichnerisch nicht dargestellten Taktsteuerung ein getaktetes Signal 16 an das aussendende Element 11 aus. Vorzugsweise ist noch ein weiteres aussendendes Element vorgesehen, das mit dem invertiertem Takt betrieben wird, es kann jedoch auch eine Zuleitung dieses zweiten Signals auf elektronischem Wege erfolgen oder auch auf die zweite Sendestrecke verzichtet werden. Über das aussendende Element 11 werden die Signale in eine Lichtstrecke eingebracht, die z.B. zum Objekt O gesandt wird und von dort reflektiert wird. Die reflektierte Strahlung wird vom empfangenden Element 12 erfasst und in ein Signal 10 umgesetzt, das der Steuerung R des HALIOS^{®}-Sensors H zugeleitet wird. In zeichnerisch nicht dargestellter Weise wird in der Verarbeitungseinheit P das Signal wie im Patent EP 706 648 B1 beschrieben in die den entsprechenden Taktabschnitten zugeordneten Signalkomponenten zerlegt. Diese werden dann in einem Vergleicher miteinander verglichen, wobei im Ruhezustand ohne Fremdeinflüsse, d.h. ohne Bewegung oder ohne Anwesenheit eines Objekts O im sensoraktiven Bereich des HALIOS^{®}-Sensors H ein einem Nullzustand entsprechendes Signal entsteht. Liegt ein derartiges einem Nullzustand entsprechendes Signal längere Zeit an, erfolgt ein Steuersignal 13 an eine Steuerung C für die Anzeigeeinheit M. Dieses Steuersignal wird über das Steuersignal 14 an die Anzeigeeinheit M gegeben und sorgt z.B. dafür, dass das Gerät an- oder abgeschaltet wird. Liegt also z.B. längere Zeit kein Signal an, d.h. ein Nullzustand vor, wird üblicherweise eine Abschaltung erfolgen.

Die Anzeigeeinheit M besitzt wenigstens ein der Anzeigeeinheit zugeordnetes oder zuordenbares optisches Element, wie z.B. Leuchtdioden, Fotodioden oder andere optisch wirksame Sende- und/oder Empfangselemente wie z.B. Anzeigeelemente. Die Erfassungseinrichtung ist damit durch einen optoelektronischen HALIOS^{®}-Sensor H gebildet, wobei das aussendende Element 11 des HALIOS^{®}-Sensor H das wenigstens eine vorhandene, der Anzeigeeinheit M zugeordnete oder zuordenbare optische Element ist. Ist es zugeordnet, so befindet es sich z.B. im Display D der Anzeigeeinrichtung und wird lediglich entsprechend angesteuert. In diesem Fall würden in Fig. 1 das aussende Element und gegebenenfalls auch das empfangende Element 12 nach unten in das Display oder z.B. in den Rahmen der Anzeigeeinheit M integriert. Alternativ bietet sich z.B. die Integration in einer WEB-CAM oder Kamera K an, wie es in Fig. 1 gestrichelt dargestellt ist. Die WEB-CAM oder Kamera K kann auch in die Vorrichtung integriert sein.

Vorzugsweise ist das wenigstens eine empfangende Element 12 des HALIOS^{®}-Sensor H ebenfalls ein in der Vorrichtung vorhandenes der Anzeigeeinheit M zugeordnetes oder zuordenbares optisches Element, wobei unter dem optischen Element das verstanden wird, was hinsichtlich des optischen Elements in Zusammenhang mit dem aussendenden Element erläutert wurde. Die damit verwirklichte Funktion ist das Ein- oder Abschalten anhand systembedingter Anforderungen z.B. zur Senkung des Energieverbrauchs. Alternativ oder ergänzend können auch Sicherungsfunktionen vorgesehen sein, auf die weiter unten noch eingegangen wird.

Dabei ist durchaus denkbar, dass einem Ausgangssignal der Kamera K oder WEB-CAM ein vom aussendenden Element 11 stammendes Signal überlagert ist, da dieses mit einer Taktfrequenz betrieben werden kann, die für das menschliche Auge nicht wahrnehmbar ist. Das aussendende Element 11 und gegebenenfalls auch das empfangende Element 12 können durch wenigstens einen Teil der Hintergrundbeleuchtung des Displays D der Anzeigeeinheit M gebildet sein. Aussendendes Element 11 und/oder empfangendes Element 12 können auch lediglich über Lichtleiter 15 zugänglich sein, wie dies im Display D schematisch für ein aussendendes Element oder empfangendes Element dargestellt ist. Vorzugsweise ist das aussendende Element 11 und/oder das empfangende Element 12 hinter dem Display D der Anzeigeeinheit M angeordnet.

Eine besonders vorteilhafte Ausführungsform, die sehr preisgünstig umgesetzt werden kann besteht darin, dass der HALIOS^{®}-Sensor H unter Verwendung von an der Erfassungseinrichtung und/oder am Monitor vorhandenen optischen Elementen arbeitet. Dies führt dazu, dass lediglich noch die Verarbeitung der Signale als reines Softwaremodul in der Vorrichtung vorzusehen ist. Die Vorrichtung kann z.B. auch in ein Mobile Phone integriert sein.

Das Ziel der vorliegenden Erfindung kann darin bestehen, die HALIOS^{®}-Technologie zur Herstellung einer intelligenten Energie-Management-Funktion unter Ausnutzung einer Annäherungsdetektion zu nutzen. Dazu wird in das bestehende System wie z.B. in ein Display D eines Mobile Phones, einem Notebook Monitor, einem PC-Monitor oder allgemein in einen Monitor ein HALIOS^{®}-Sensor H integriert, der das An- und Abschalten des Displays D anhand der systembedingten Anforderungen steuert und dabei den Energieverbrauch senkt. Das HALIOS^{®}-Prinzip arbeitet sowohl mit sichtbarem Licht als auch im infraroten Bereich. Zur Erzeugung des ausgesandten Lichts kann eine separate LED passend zum Empfänger gewählt werden, vorzugsweise wird auf eine vorhandene Hintergrundbeleuchtung zurückgegriffen, die z.B. basierend auf weißen LEDs unmittelbar als Transmitter eingesetzt werden kann. Bei einem Mobile Phone kann auch die integrierte Kamera als Empfänger z.B. zusammen mit einer vorhandenen Flash-Light LED als Sender verwendet werden.

Wird die Hintergrundbeleuchtung des Systems, wie z.B. bei einem Display an einem Mobile Phone oder Laptop möglich, als Transmitter verwendet, indem sie z.B. in einer HALIOS^{®}-Regelschleifenkonfiguration angeordnet ist, kann das Licht durch den Lichtleiter/Diffusor des Displays ausgesendet werden. Auch die Verwendung von Flashlight LEDs als Transmitter ist möglich. Bedarfsweise kann auch eine der Anzeigeeinheit zuordenbare, gesonderte, nicht zum System gehörende LED eingesetzt werden.

Als Empfänger im batteriebetriebenen System bietet sich eine LED an. Diese kann mittels einer Gyratorschaltung auf eine Leerlaufspannung von 0,6 Volt dynamisch begrenzt werden. In diesem Fall kann sie als wellenlängenselektiver Empfänger betrieben werden, der die Batterie nicht durch ein externen Strom belastet. Im Gegensatz dazu wird unter Verwendung einer Fotodiode, was prinzipiell auch möglich ist, unter Einstrahlung von Sonnenlicht ein signifikanter Strom fließen, der die Batterie belastet. Selbst bei einer kleinen Fotodiode mit einer Fläche von 1mm² kann ein Fotostrom von 1 bis 3 mA anfallen. Die Verwendung einer LED bietet sich an, da gerade aufgrund des HALIOS^{®}-Systems eine hohe Empfindlichkeit gegeben ist, sodass auch die LED als Empfänger betrieben werden kann. Ein derartiger Empfänger kann sich oberhalb, unterhalb oder seitlich am Display D befinden, in einer optimierten Form ist der Empfänger hinter dem Display angeordnet und nutzt den gleichen Lichtleiter zur Konzentration des reflektierten Signals, den die Transmitter zur homogenen Lichtverteilung benutzen.

Im Fall der Verwendung einer vorhandenen WEB-CAM als Empfänger, soll parallel zum eigentlichen Bildsignal ein Sender z.B. in Form einer Infrarot LED oder weißen LED ein getaktetes Licht mit einer Taktfrequenz von z.B. 10 kHz bis 100 kHz aussenden. Dieses Signal wird sich als taktsynchroner Anteil in einem synchron demodulierten Bildsignal als Unterschied in den verschiedenen Taktphasen wieder finden. Diese Art der Monitorschaltung zur Bewegungsdetektion kann speziell auch als eigenständiges Softwaremodul in einem PC installiert werden. Diesem Modul muss zur synchronen Demodulation nur die Zeitinformation über den Sendertakt vorliegen. Damit ist eine Erkennung eines Objekts O oder eines Users und z.B. auch eine entsprechende Reaktion zur Energieeinsparung möglich. Die Erzeugung des getakteten Lichtsignals kann mittels einer über z.B. eine PC-Schnittstelle gesteuerten externen LED ermöglicht werden, aber auch, wie oben beschrieben, in das Display integriert sein.

Insbesondere bei einem Mobile Phone kann auch die im Gerät vorhandene Kamera als Empfänger verwendet werden. Dazu sendet parallel zum eigentlichen Bildsignal der integrierten Kamera ein Sender wie auch bei der WEB-CAM ein getaktes Signal mit einer Taktfrequenz von z.B. 10 kHz bis 100 kHz aus. Dieses Signal findet sich als taktsynchroner Anteil in einem synchron demodulierten Bildsignal als Unterschied in den verschiedenen Taktphasen wieder. Auch hier ist ein eigenständiges Softwaremodul zur Integration in die Steuerung des Mobile Phones möglich. Mit der entsprechenden Taktinformation kann auch der User oder ein Objekt erkannt werden und ist eine Energieeinsparung möglich. Die Erzeugung des getakteten Lichtsignals kann in diesem Fall z.B. mittels einer im System vorhandenen LED, wie z.B. in der Hintergrundbeleuchtung vorhanden, erfolgen oder es kann eine vorhandene Flash-Light LED genutzt werden.

Damit ergibt sich ein kostenoptimiertes System, das schon vorhandene Elemente nutzt und bei Verwendung einer LED als Empfänger zudem eigenverbrauchsoptimiert arbeitet. Ein optimierter Eigenverbrauch wird auch durch eine niedrige Wiederholfrequenz der Messfrequenzerfassung erreicht. Bei Verwendung einer WEB-CAM als Empfänger kann unter Verwendung einer zusätzlichen getakteten Lichtquelle und der dazu taktsynchronen Auswertung der WEB-CAM Signale eine kostengünstige Energiesparschaltung z.B. für PC und Notebook realisiert werden. Wenn sowohl die Modulation der Hintergrundbeleuchtungs-LED als Sender als auch die Verwendung der WEB-CAM als Empfänger erfolgt und die Signalauswertung in einem in der Steuerung integrierten Softwaremodul erfolgt, sind außer der PC-internen Verknüpfung der Signale zur synchronen Demodulation keine weiteren zusätzlichen Elemente mehr nötig.

Bei Verwendung in Verbindung mit einem Mobile Phone ist auch eine Bewegungsdetektion im Nahbereich, z.B. in der Nähe des Kopfes möglich. Auch hier kann die gesamte Vorrichtung in das System integriert werden, und z.B. kann die Lautstärke des Lautsprechers auf Konferenzbetrieb oder Telefonbetrieb umgestellt werden, wobei das System selbst erkennt, welcher Betriebszustand gerade erforderlich ist.

Selbstverständlich kann die intelligente Monitorsteuerung auch mittels einer von der Zielapplikation unabhängigen Einheit vorgenommen werden, die dann der entsprechenden Anzeigeeinheit zuordenbar ist. Eine derartige Einheit kann den Sender, Empfänger und eventuell auch eine zusätzliche Kompensationsdiode enthalten, wie sie im HALIOS^{®}-System bekannt ist. Für Anwendungsfälle, bei denen die Genauigkeitsbeeinflussung der Messung durch Umgebungslicht die Applikation nicht beeinträchtigt, kann auf die Verwendung der HALIOS^{®}-Kompensationsdiode auch verzichtet werden.

Die Vorrichtung kann z.B. mit Systemen verwendet werden, die Transmitter enthalten ( z.B. Fernseher mit LED-Backlight als Hintergrundbeleuchtung). Bei Systemen wie Laptop, Desktop, Mobilephone oder auch Geldautomaten können bestehende Transmitter und Empfänger genutzt werden. Eventuell bietet sich aber ein getrennter Empfänger aus Systemsicht an.

Bei der Verwendung einer WEB-CAM/Kamera und der Überlagerung eines Signals und der Auswertung des Kamerasignals bezüglich taktsynchroner Anteile bin ich nicht sicher, kann aus ein Sensorsystem ohne Kompensationsdiode und/oder Kompensation des Eingangssignals erwendet werden. Speziell im Mobilephone-Bereich, in Laptops oder bei Geldautomaten kann die Vorrichtung ohne weitere zusätzliche Elemente eingesetzt werden. Unter Ausnutzung der vorhandenen Elemente und mit einer zusätzlichen Software kann ein Objekt in der Nähe des Displays erkannt werden.

Die Erfindung wurde bereits im Prinzip mit einem empfindlichen, optischen Detektionssystem auf Basis des HALIOS^{®}-Konzepts erprobt, wobei eine Reflektionserkennung durch teiltransluzente oder diffuse Oberflächen möglich ist.

Eine zusätzliche oder alternative Sicherungsfunktion ist bei allen Geräten möglich, die mit einer derartigen Vorrichtung ausgerüstet sind. Hierzu kommen insbesondere PC- und Notebook Monitore in Betracht, die ohne direkte Benutzerkontrolle eine Standby-Funktion bereitstellen können. Im Falle einer momentanen Nichtbenutzung werden , unnötige Energieverbraucher abgeschaltet, was auch zu einer Sicherungsfunktion beitragen kann. Erkennt das System z.B., dass im unmittelbaren Umfeld keine Bewegung mehr stattfindet, wird auf den Standby-Betrieb umgeschaltet, aus dem heraus nur mit einer Passwort-Kennung wieder in den Betriebszustand zurückgeschalten werden kann. Speziell im Fall einer Verwendung mit einer LED als Empfänger ist auch eine Wakeup-Funktion denkbar. So kann z.B. im Falle eines PC-Motors oder Notebooks detektiert werden, ob das Gerät benutzt wird, und entsprechend der Monitor an- und abgeschaltet werden. Im PC-/Notebook-Bereich ist zusätzlich eine Sicherheitsanwendung denkbar, bei der die Detektionsmethode benutzt wird, um die Geräte benutzerunabhängig unzugänglich zu machen. Wenn der Nutzer einen bestimmten Detektionsbereich auch kurzzeitig verlässt und die Geräte dann unbeaufsichtigt zurücklässt, nimmt der HALIOS^{®}-Sensor diesen Ruhezustand wahr und schaltet das Gerät in einen Sicherungsmodus um. Damit wird ein unerlaubter Zugriff z.B. am Arbeitsplatz aktiv verhindert.

### Bezugszeichenliste

- 10: Signal
- 11: Aussendendes Element
- 12: Empfangenes Element
- 13, 14: Steuersignal
- 15: Lichtleiter
- 16: Sendesignal

- C: Steuerung für Anzeigeeinheit
- D: Display
- H: HALIOS^{®}-Sensor
- K: Kamera
- M: Anzeigeeinheit
- 0: Objekt
- P: Verarbeitungseinheit
- R: Steuerung für HALIOS^{®}-Sensor

## Patentansprüche

1. Vorrichtung zur Überwachung einer Monitorsteuerung mit einer Anzeigeeinheit (M) mit wenigstens einem der Anzeigeeinheit zugeordneten optischen Element, einem Energie-Management-System und/oder Sicherungssystem (S) mit einer Erfassungseinheit mit wenigstens einem aussendenden Element (11) und wenigstens einem empfangenden Element (12) zur Erfassung von Bewegungen im Umfeld der Anzeigeeinheit (M) zur Umsetzung der erfassten Bewegungen in ein Signal (10) sowie mit einer Verarbeitungseinheit (P) zur Verarbeitung des Signals (10) in ein Steuersignal (13) für eine Funktion der Anzeigeeinheit (M), **dadurch gekennzeichnet, dass** die Erfassungseinheit durch einen optoelektronischen Sensor (H) gebildet ist und dass das aussendende Element (11) des Sensors (H) das wenigstens eine für andere Zwecke an der Vorrichtung vorhandene, der Anzeigeeinheit (M) zugeordnete optische Element ist und dass das empfangende Element (12) des Sensors (H) ebenfalls ein vorhandenes, der Vorrichtung zugeordnetes oder zuordenbares optisches Element ist.

2. Vorrichtung nach Anspruch 1, **dadurch gekennzeichnet, dass** der Sensor ein optoelektronischer HALIOS^{®}-Sensor (H)

3. Vorrichtung nach Anspruch 1 oder 2, **dadurch gekennzeichnet, dass** das empfangende Element (12) ein der Anzeigeeinheit (M) zugeordnetes oder zuordenbares optisches Element ist.

4. Vorrichtung nach einem der vorhergehenden Ansprüche, **dadurch gekennzeichnet, dass** die Funktion ein An- oder Abschalten anhand systembedingter Anforderungen zur Senkung des Energieverbrauches ist.

5. Vorrichtung nach einem der vorhergehenden Ansprüche, **dadurch gekennzeichnet, dass** das empfangende Element (12) eine Fotodiode oder eine LED ist.

6. Vorrichtung nach einem der vorhergehenden Ansprüche, **dadurch gekennzeichnet, dass** das empfangende Element (12) eine in der Vorrichtung integrierte oder daran angeordnete WEB-CAM oder Kamera (K) ist.

7. Vorrichtung nach Anspruch 5, **dadurch gekennzeichnet, dass** einem Ausgangssignal der Kamera (K) oder WEB-CAM ein vom aussendenden Element (11) stammendes Signal überlagert ist.

8. Vorrichtung nach einem der vorhergehenden Ansprüche, **dadurch gekennzeichnet, dass** das aussendende Element (11) durch wenigstens einen Teil der Hintergrundbeleuchtung des Displays (D) der Anzeigeeinheit (M) gebildet ist.

9. Vorrichtung nach einem der vorhergehenden Ansprüche, **dadurch gekennzeichnet, dass** Lichtleiter (15) der Anzeigeeinheit (M) zum Aussenden von Licht vom aussendenden Element (11) und/oder zum Empfang von Licht durch das empfangende Element (12) vorgesehen sind.

10. Vorrichtung nach einem der vorhergehenden Ansprüche, **dadurch gekennzeichnet, dass** das aussendende Element (11) und/oder das empfangende Element (12) hinter dem Display (D) der Anzeigeeinheit (M) angeordnet sind.

11. Vorrichtung nach einem der vorhergehenden Ansprüche, **dadurch gekennzeichnet, dass** der HALIOS^{®}-Sensor (H) unter Verwendung von an der Erfassungseinrichtung (E) und/oder am Monitor vorhandenen optischen Element als reines Softwaremodul in der Vorrichtung vorgesehen ist.

12. Vorrichtung nach einem der vorhergehenden Ansprüche, **dadurch gekennzeichnet, dass** die Vorrichtung in ein Mobile Phone oder ein Laptop oder in einen Geldautomaten integriert ist.
